# EUROPÄISCHE PATENTSCHRIFT

(11) **EP 2 361 939 B1**
(45) Veröffentlichungstag und Bekanntmachung des Hinweises auf die Patenterteilung: **22.08.2012**
(21) Anmeldenummer: 10001928.0
(22) Anmeldetag: 25.02.2010
(51) Int. Cl.: C08G 18/28, C08G 18/48, C09D 7/00

(54) **Verdickungsmittel auf Polyurethanbasis**
Polyurethane thickener
Epaississant à base de polyuréthane

(43) Veröffentlichungstag der Anmeldung: 31.08.2011
(73) Patentinhaber: Cognis IP Management GmbH, 40589 Düsseldorf (DE)
(72) Erfinder: Münzenberg, Cindy, 40239 Düsseldorf (DE); Pietsch, Oliver, 45481 Mülheim (DE)

(56) Entgegenhaltungen:
- EP-A1- 1 164 169
- WO-A1-97/21743
- WO-A2-2006/002813
- US-A- 5 109 061

## Beschreibung

### Gebiet der Erfindung

Die Erfindung betrifft Verdickungsmittel basierend auf einer wäßrigen Zubereitung nichtionischer in Wasser dispergierbarer oder löslicher Polyurethane spezieller Struktur.

### Stand der Technik

Polyurethanlösungen oder -dispersionen in wasserverdünnbarer wäßriger oder überwiegend wäßriger Phase werden vom Fachmann als HEUR-Verdicker bezeichnet (das Akronym HEUR leitet sich von "nonionic hydrophobically modified ethylene oxide urethane block copolymer" ab) und bereits seit längerem in den unterschiedlichsten Anwendungsfeldern zur Verdickung wasserbasierter Dispersionsfarben eingesetzt.

Die bereits Ende der 70er Jahre in US-A-4,079,028 beschriebenen Verdickungsmittel vom HEUR-Typ sind aufgebaut aus linearen und/oder verzweigten Polyethylenglycolblöcken und Hydrophobsegmenten, die in der Regel über Urethangruppen (bei Verwendung von Aminen statt Alkoholen resultieren Harnstoffgruppen) miteinander verknüpft sind.

Als Wirkprinzip für die verdickende Wirkung der HEUR-Verdicker wird angenommen, dass die Polyethylenglykolsegmente die Wasserverträglichkeit sicherstellen und die Hydrophobsegmente über eine Assoziation untereinander sowie mit dispergierten Bindemittelteilchen der zu verdickenden Dispersionsfarbe in dieser einen viskositätsgebenden dreidimensionalen Molekülverbund aufbauen.

Bevorzugte hydrophobe Bausteine in marktüblichen HEUR-Verdickern sind längerkettige, in der Regel monofunktionelle Alkohole, wie beispielsweise n-Octanol, n-Dodecanol, iso-Tridecylalkohol, iso-Nonylphenol oder Ricinolsäuremethylester. Diese Alkohole kommen überwiegend als solche, aber auch in Form ihrer Additionsprodukte mit einigen wenigen Äquivalenten Ethylenoxid zum Einsatz. Die in marktüblichen HEUR-Verdickern überwiegend verwendeten mehrfunktionellen Isocyanat-Bausteine sind in der Regel difunktionell. Beispielsweise kommen Methylenbis-(4-cyclohexyl)diisoyanat, m/p-Tetramethylenxylylendiisocyanat, Hexamethylendiisocyanat, 2,4-Toluylendisocyanat, Trimethylhexamethylendiisocyanat oder 4/2,4'-Diphenylmethandiisocyanat zum Einsatz. Die in marktüblichen HEUR-Verdickern verwendeten Polyethylenglycol-Bausteine sind in der Regel ebenfalls difunktionell und weisen Molekulargewichte im Bereich einiger Tausend Dalton, beispielsweise 4500 oder 10000 Dalton, auf.

Die Einsatzverhältnisse der einzelnen Bausteine von HEUR-Verdickern - seien es nun verzweigte oder unverzweigte Polyethylenglykole, mono- oder mehrfunktionelle Hydrophobalkohole, vorethoxylierte mono- oder mehrfunktionelle Hydrophobalkohole, kettenverlängernd eingesetzte di- oder mehrfunktionelle kurzkettige Alkohole - werden in der Regel so gewählt, dass jedem noch über eine Hydroxylgruppen reaktiven Ethylenglykolsegmentende jeweils ein Hydrophobalkohol zur Verfügung steht.

Die hydroxylterminierten Synthesebausteine von HEUR-Verdickern werden durch Reaktion mit di- oder mehrfunktionellen Isocyanaten miteinander verbunden, wobei die Equivalenteinsatzverhältnisse der miteinender zur Additionsreaktion zu bringenden Isocyanat- sowie der "H-aciden" Gruppen (in der Regel OH-Gruppen; es sind aber auch NH₂-Gruppen möglich) so gewählt werden, dass jedem "H-aciden"Gruppenäquivalent, also in der Regel jeder OH-Gruppe mindestens geringfügig weniger als ein Isocyanatgruppenäquivalent gegenüber steht. Mit anderen Worten: Das Äquivalentverhältnis OH : NCO wird in der Regel auf einen Wert von mindestens 1 : 1 eingestellt, wobei idealerweise 1 : 1 angestrebt wird oder die OH-Gruppen im Vergleich zu den NCO-Gruppen um 5-10% überwiegen (was einem Äquivalentverhältnis von OH : NCO im Bereich von 1,05 : 1 bis 1,1 : 1 entspricht), um sicherzustellen, dass das Endprodukt (der HEUR-Verdicker) keine freien NCO-Gruppen enthält, die unerwünscht sind, einerseits aus toxikologischen Gründen, andererseits weil sie beim späteren Einsatz in zu verdickenden Rezepturen unerwünschte Folgereaktionen mit Rezepturbestandteilen eingehen können. Dieses Grundprinzip, dass nämlich bei der Herstellung von HEUR-Verdickern die OH-Gruppen der Polyethylenglykol- und Hydrophobalkohol-Bausteine im Vergleich zu den NCO-Gruppen der Isocyanat-Bausteine mit ca. 5-10% leicht überwiegen, ist auch bereits Bestandteil der Lehre der oben genannten US-A-4,079,028 (vergleiche dort Spalte 3, Zeilen 17 ff).

WO-A-2006/002813 beschreibt Verdickungsmittel, die auf einer wäßrigen Zubereitung nichtionischer, in Wasser dispergierbarer oder in Wasser löslicher Polyurethane basieren, wobei diese Polyurethane herstellbar sind durch Umsetzung von (a) ein oder mehreren hydrophilen Polyolen (a), die pro Molekül mindestens zwei OH-Gruppen und mindestens zwei funktionelle Gruppen, die ausgewählt sind aus den Funktionen — O- (Ethergruppen) und -COO- (Estergruppen), wobei das Molgewicht dieser hydrophilen Verbindungen mindestens 300 beträgt, enthalten, (b) ein oder mehreren hydrophoben Verbindungen mit mindestens einem Zerewitinoff-aktiven Wasserstoffatom pro Molekül, wobei das Molgewicht dieser hydrophoben Verbindungen im Bereich von 100 bis 500 liegt und wobei pro Molekül dieser hydrophoben Verbindungen mindestens eine lineare oder verzweigte, gesättigte oder ungesättigte Alkylkette mit mindestens fünf aufeinander folgenden C-Atomen enthalten ist, die nicht mit Heteroatomen verknüpft ist, und (c) ein oder mehreren, mindestens difunktionellen Isocyanaten, wobei die Verbindungen a), b) und c) in den Äqivalentverhältnissen OHₐ) : ZH_{b}) : NCO_{c}) von 1 : (1+x) : 2(1+y) miteinander umgesetzt werden, mit den Maßgaben, dass folgende Bedingungen gelten: x ist eine Zahl im Bereich von 0,05 bis 1,2 und y ist eine Zahl im Bereich von (0,2 bis 1,05) x.

### Beschreibung der Erfindung

Aufgabe der Erfindung war es, Verdickungsmittel auf Polyurethanbasis bereitzustellen, die gegenüber den Polyurethanverdickungsmitteln aus dem Stand der Technik bei vergleichsweise geringerer Eigenviskosität der Verdickungsmittel in ihrer Konfektionierungsform bei gleicher Menge eine erhöhte Viskosität des verdickten Produkts erreicht werden. Außerdem sollten die Verdickungsmittel gewünschtenfalls ohne die Verwendung von flüchtigen organischen Lösungsmitteln herstellbar sein. Insbesondere sollten die Verdickungsmittel in ihrer Konfektionierungsform bei gleicher Menge im Bereich niedriger Scherraten (low-shear-Bereich ≤10 s⁻¹) eine verbesserte Verdickungswirkung aufweisen bei gleichzeitig geringer bis moderater Viskosität im mid- und highshear-Bereich, wodurch als gewünschter technischer Effekt eine bessere Verstreichbarkeit bei geringerem Kraftaufwand möglich ist.

Gegenstand der vorliegenden Erfindung sind Verdickungsmittel, die auf einer wäßrigen Zubereitung nichtionischer, in Wasser dispergierbarer oder in Wasser löslicher Polyurethane basieren, wobei diese Polyurethane herstellbar sind durch Umsetzung von
(a) ein oder mehreren hydrophilen Polyolen (a), die pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 beträgt, enthalten,
(b) ein oder mehreren Verbindungen der Formel (I) 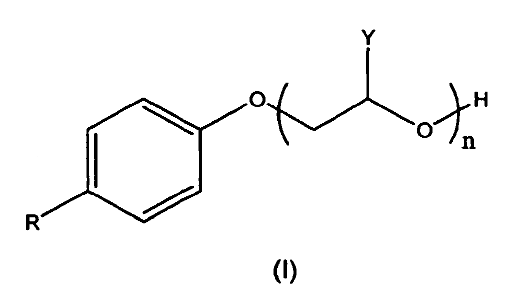 worin R eine Gruppe C₁₅H₃₁₋ₘ (mit m = 0, 2, 4 oder 6), Y Wasserstoff oder eine Methylgruppe und n eine Zahl im Bereich von 0 bis 10 bedeutet, und
(c) ein oder mehreren, mindestens difunktionellen Isocyanaten,
dadurch gekennzeichnet, dass die Verbindungen a), b) und c) in den Äqivalentverhältnissen OHₐ): OH_{b}) : NCO_{c}) von 1 : (1+x) : 2(1+y) miteinander umgesetzt werden, mit den Maßgaben, dass folgende Bedingungen gelten:
- x ist eine Zahl im Bereich von 0,05 bis 1,2,
- y ist eine Zahl im Bereich von (0,2 bis 1,05) x und
- Äquivalentverhältnis NCO_{c)} > (OHₐ₎ + OH_{b)}).

Die Verdickungswirkung der erfindungsgemäßen Verdickungsmittel ist erheblich besser als die Verdickungswirkung der in der oben zitierten WO-A-2006/002813 offenbarten Verbindungen. Insbesondere gilt dies für den im low-shear Bereich (< 10 s⁻¹).

Der Ausdruck OHₐ) bezeichnet die primären (terminalen) OH-Gruppen der Verbindungen a). Der Ausdruck OH_{b}) bezeichnet die gegenüber NCO-Gruppen reaktiven OH-Guppen der Verbindungen b). Der Ausdruck NCO_{c}) bezeichnet die Isocyanatgruppen der Verbindungen c).

Im Rahmen der vorliegenden Erfindung handelt es sich bei den Äquivalenten der Verbindungen a) um OH-Äquivalente, bei den Verbindungen b) um OH-Äquivalente und bei den Verbindungen c) um NCO-Äquivalente.

Obwohl der Begriff des Äquivalents dem Fachmann auf dem hier in Rede stehenden Gebiet der Polyurethanchemie geläufig ist, sei nachstehend der Klarheit halber dargestellt, was darunter zu verstehen ist.

Der Ausdruck Äquivalente ist im üblichen Sinne zu verstehen und fokussiert auf die zur Verfügung stehenden reaktiven Gruppen von Molekülen. So enthält beispielsweise 1 mol eines Monoalkohols 1 mol an OH-Gruppen; 1 mol eines Diols enthält 2 mol an OH-Gruppen, 1 Mol eines Triols enthält drei mol an OH-Gruppen, usw. Ganz analog enthält 1 mol eines Diisocyanates (NCO-Funktionalität = 2) 2 mol an NCO-Gruppen, ein mol eines Polyisocyanatgemisches mit einer (mittleren) Funktionalität von 2,3 enthält durchschnittlich 2,3 mol an NCO-Gruppen, usw. Will man beispielsweise Alkohole und Isocyanate miteinander derart umsetzen, dass die eingesetzten Verbindungen bezogen auf die OH- bzw. NCO-Gruppen in bestimmten Verhältnissen stehen sollen, so empfiehlt es sich, anstelle von Gewichts- oder Molverhältnissen auf die Verhältnisse der reaktiven Gruppen abzustellen. Dieses OH : NCO-Verhältnis bezeichnet man als das Äquivalentverhältnis.
Allgemein ausgedrückt ist das Äquivalentverhältnis das Zahlenverhältnis definierter reaktiver Gruppen in den eingesetzten Reaktanden.

Der Anschaulichkeit halber sei zusätzlich durch ein praktisches Beispiel erläutert, wie man ein Äquivalentverhältnis auf einfache Weise ermittelt. Setzt man beispielsweise im Sinne der erfindungsgemäßen Lehre
- 1 mol eines Polyethylenglykols (PEG, OH-Funktionalität = 2) mit zwei OH-Gruppen pro Molekül mit
- 4 mol eines Hydrophobalkohols (I) (OH-Funktionalität =1) mit einer OH-Gruppe pro Molekül und
- 4 mol eines Diisocyanates (NCO-Funktionalität = 2)
zum Polyurethan um, dann enthält
- das eingesetzte PEG 2 mol OH-Gruppen,
- der eingesetzte Hydrophobalkohol (I) 4 mol OH-Gruppen und
- das eingesetzte Diisocyanat 8 mol NCO-Gruppen.

Das Zahlenverhältnis der OH-Gruppen des Polyethylenglykols zu den OH-Gruppen des Hydrophobalkohols (I) zu den NCO-Gruppen des Diisocyanats beträgt mithin 2 : 4 : 8 oder 1 : 2 : 4.
Oder umgekehrt: Will man beispielsweise die gerade genannten Komponenten (PEG, Hydrophobalkohol (I) und Diisocyanat) in einem Äquivalentverhältnis von 1 : 3 : 3 umsetzen, dann hat man Polyethylenglykol, Hydrophobalkohol (I) und Diisocyanat in einem Molverhältnis von 0,5 : 3 : 1,5 oder 1 : 6 : 3 einzusetzen.

Vorzugsweise ist x ist eine Zahl im Bereich von 0,2 bis 1,0 und insbesondere im Bereich von 0,5 bis 1,0.

Der Klarheit und Eindeutigkeit halber sei ausdrücklich festgestellt, dass sich y durch Multiplikation ergibt. Der für y angegebene Ausdruck, nämlich "(0,2 bis 1,05) x" bedeutet mithin, dass x — wofür eine Zahl aus dem für x angegebenen Bereich einzusetzen ist — mit einer Zahl aus dem Bereich 0,2 bis 1,05 zu multiplizieren ist.

Vorzugsweise ist y ist eine Zahl im Bereich von (0,4 bis 1,0) x und insbesondere im Bereich von (0,6 bis 1,0) x.

In einer bevorzugten Ausführungsform ist x eine Zahl im Bereich von 0,2 bis 1,0 und y eine Zahl im Bereich von (0,4 bis 1,0) x.

In einer weiteren bevorzugten Ausführungsform ist x eine Zahl im Bereich von 0,5 bis 1,0 und y eine Zahl im Bereich von (0,4 bis 1,0) x.

### Zu den Komponenten (a)

Die hydrophilen Polyole (a) enthalten per definitionem pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 und vorzugsweise mindestens 1000 beträgt. Bei der Komponente (a) handelt es sich mithin um den hydrophilen Molekülbaustein der erfindungsgemäßen Polyurethane vom Typ HEUR. Ausdrücklich sei darauf hingewiesen, dass sich die Verbindungen (a) grundsätzlich von denjenigen Verbindungen (b) unterscheiden, die nicht hydrophil, sondern hydrophob sind.

Als Verbindungen (a) sind beispielsweise die Polymerisationprodukte des Ethylenoxids, deren Misch- oder Pfropfpolymerisationsprodukte sowie die durch Kondensation von mehrwertigen Alkoholen oder Mischung derselben und die durch Ethoxylierung von mehrwertigen Alkoholen, Amiden, Polyamiden und Aminoalkoholen gewonnenen Polyether geeignet. Beispiele geeigneter Verbindungen (a) sind etwa Polyethylenglykole, Anlagerungsprodukte von Ethylenoxid an Trimethylolpropan, EO-PO-Blockcopolymere, OH-terminierte Polyester wie beispielsweise solche vom Typ der mehrfunktionellen Polycaprolactone.

Bevorzugte Verbindungen (a) sind Polyetherpolyole. Dies sind solche hydrophilen Polyole (a), die pro Molekül mindestens zwei OH-Gruppen und mindestens zwei Funktionen -O- (Ethergruppen) enthalten. Diese Polyetherpolyole sind in aller Regel so stark hydrophil, dass sie wasserlöslich sind.
Zur Herstellung der erfindungsgemäßen Polyurethane eignen sich bevorzugt solche Polyetherpolyole, die zumindestens überwiegend Polyethylenglykol enthalten. Besonders gute Ergebnisse werden erzielt, wenn diese Polyethenglykole einen mittleren Gehalt an Alkoxyeinheiten im Bereich von 20 bis 400 aufweisen. Bevorzugt sind als Verbindungen (a) Diole der allgemeinen Formel HO-(CH₂-CH₂-O)ₓ-H, wobei x die Werte 30 bis 300 annehmen kann. Hierbei handelt es sich um Polyethylenglykole, die Kondensationsprodukte des Ethylenoxids mit Ethylenglykol oder Wasser darstellen. Vorzugsweise stellt man das Molgewicht dieser Polyethylenglykole auf Werte im Bereich von 2000 bis 20.000 ein. Polyethylenglykole mit einem Molgewicht im Bereich von 4.000 bis 10.000 sind als Verbindungen (a) besonders bevorzugt.

### Zur Komponente (b)

### Bei Komponente (b) handelt es sich um Verbindungen der Formel (I)

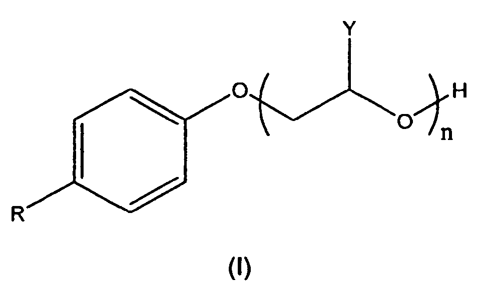

worin R eine Gruppe C₁₅H₃₁₋ₘ (mit m = 0, 2, 4 oder 6), Y Wasserstoff oder eine Methylgruppe und n eine Zahl im Bereich von 0 bis 10 bedeutet.

Die Verbindungen (I) enthalten ein Strukturelement -(CH₂-CHY-O)ₙ-. Es sei festgestellt, dass die verwendete Formelschreibweise ausdrücken soll, dass sich dieses Strukturelement von Ethylenoxid (EO) oder Propylenoxid (PO) ableitet, nämlich insofern, als sich ― logischerweise für den Fall, dass der Index n ungleich null ist ― dieses Strukturelement synthetisch aus einer Addition von EO oder PO bzw. Ethylenglykol oder Propylenglykol (für n = 1) bzw. Polyaddition von EO und/oder PO bzw. Polyethylenglykol oder Polypropylenglykol oder entsprechenden gemischten EO-PO-Copolymeren (für n ≥ 2) resultiert. Es sei ferner ausdrücklich festgestellt, dass dieses Strukturelement sowohl ausschließlich aus EO- als auch ausschließlich aus PO-Bausteinen aufgebaut sein kann, als auch EO- und PO-Bausteine in gemischter Form, blockweise oder statistisch verteilt, enthalten kann. Daher stellt die verwendete formelmäßige Darstellung des genannten Strukturelementes eine abkürzende Schreibweise für die genannten Möglichkeiten dar, welche dem kundigen Fachmann selbstverständlich sind.

So bedeutet etwa Y = H und n = 5, dass das entsprechende Strukturelement fünf miteinander verknüpfte EO-Einheiten enthält, was einer Gruppierung -(O-CH₂-CH₂-)₅- entspricht; dagegen bedeutet Y = CH₃ und n = 5, dass das Strukturelement fünf miteinander verknüpfte PO-Einheiten enthält, was einer Gruppierung -(O-CH₂-CH(CH₃))₅- entspricht, wobei - wie dem Fachmann bekannt - die Orientierung der Methylgruppe innerhalb des Strukturelements für jeden PO-Baustein in zweierlei Weise realisiert sein kann, nämlich als - (O-CH₂-CH(CH₃))- oder -(O-CH(CH₃)-CH₂)-.

In einer Ausführungsform setzt man solche Verbindungen (I) ein, worin R eine Gruppe C₁₅H₃₁₋ₘ (mit m = 0, 2, 4 oder 6), Y Wasserstoff oder eine Methylgruppe und n die Zahl 0 bedeutet; es handelt sich bei diesen Verbindungen (I) um Cardanole.

In einer Ausführungsform setzt man solche Verbindungen (I) ein, worin R eine Gruppe C₁₅H₃₁₋ₘ (mit m = 0, 2, 4 oder 6), Y Wasserstoff oder eine Methylgruppe und n eine Zahl im Bereich von 1 bis 10 bedeutet; es handelt sich bei diesen Verbindungen (I) um Cardanol-Alkoxylate.

Die Verbindungen (I) können einzeln oder als Gemisch eingesetzt werden.

### Zu den Komponenten (c)

Als mindestens difunktionelle Isocyanate (c) sind alle mehrfunktionellen aromatischen, alicyclischen und aliphatischen Isocyanate geeignet. Vorzugweise enthalten die geeigneten mehrfunktionellen Isocyanate im Mittel 2 bis höchstens 4 NCO- Gruppen. Diisocyanate sind als Verbindungen (c) bevorzugt.

Beispielsweise seien als geeignete Isocyanate genannt 1,5- Naphthylendiisocyanat, 4,4'-Diphenylmethandiisocyanat (MDI), hydriertes MDI (H₁₂MDI), Xylylendiisocyanat (XDI), Tetramethylxyloldiisocyanat (TMXDI), 4,4'- Diphenyldimethylmethandiisocyanat, Di- und Tetraalkyldiphenylmethandiisocyanat, 4,4'-Dibenzyldiisocyanat, 1,3-Phenylendiisocyanat, 1,4- Phenylendiisocyanat, die Isomeren des Toluylendiisocyanats (TDI), gegebenenfalls in Mischung, 1-Methyl-2,4-diisocyanato-cyclohexan, 1,6- Diisocyanato-2,2,4-trimethylhexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'- Diisocyanatophenylperfluorethan, Tetramethoxybutan-1,4-diisocyanat, Butan- 1,4-diisocyanat, Hexan-1,6-diisocyanat (HDI), Dicyclohexylmethandiisocyanat, Cyclohexan-1,4-diisocyanat, Ethylen- diisocyanat, Phthalsäure-bis-isocyanatoethylester, ferner Polyisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,2-Diisocyanatododecan und Dimerfettsäure-diisocyanat. Interesse verdienen teilweise verkappte Polyisocyanate, welche die Bildung selbstvernetzender Polyurethane ermöglichen, z.B. dimeres Toluylendiisocyanat, oder mit beispielsweise Phenolen, tertiärem Butanol, Phthalimid, Caprolactam partiell umgesetzte Polyisocyanate. Erfindungsgemäß bevorzugt ist es, dass die zur Herstellung der Polyurethane eingesetzten Isocyanate (c) zumindest überwiegend Isophorondiisocyanat (IPDI) und/oder Tetramethylxyloldiisocyanat (TMXDI) enthalten. Vorzugsweise wird Komponente (c) ausschließlich gewählt aus der Gruppe Isophorondiisocyanat (IPDI) und Tetramethylxyloldiisocyanat (TMXDI).

In einer bevorzugten Ausführungsform werden Isocyanate mit einer Funktionalität von 2 (difunktionelle Isocyanate) eingesetzt.

In einer anderen Ausführungsform werden — anteilsweise oder ganz - Isocyanate mit einer Funktionalität oberhalb von 2 eingesetzt, wenn nämlich gewünscht ist, Polyurethane mit verzweigter Struktur herzustellen.

### Zu den erfindungsgemäß einzusetzenden Polyurethanen

Das OH/OH/NCO-Verhältnis der erfindungsgemäß einzusetzenden Polyurethane, die zwingend die Bausteine (a), (b) und (c) enthalten müssen, lässt sich im Prinzip über einen weiten Bereich variieren, wobei die oben dargelegten Bedingungen einzuhalten sind.

### Verdickerkonzentrate

Ein weiterer Erfindungsgegenstand sind Verdickerkonzentrate enthaltend
(A) Wasser,
(B) nicht-ionische, in Wasser dispergierbare oder in Wasser lösliche Polyurethane, die herstellbar sind durch Umsetzung von
   (a) ein oder mehreren hydrophilen Polyolen (a), die pro Molekül mindestens zwei OH-Gruppen und mindestens zwei funktionelle Gruppen, die ausgewählt sind aus den Funktionen -O- (Ethergruppen) und -COO- (Estergruppen), wobei das Molgewicht dieser hydrophilen Verbindungen mindestens 300 beträgt, enthalten,
   (b) ein oder mehreren Verbindungen der Formel (I) 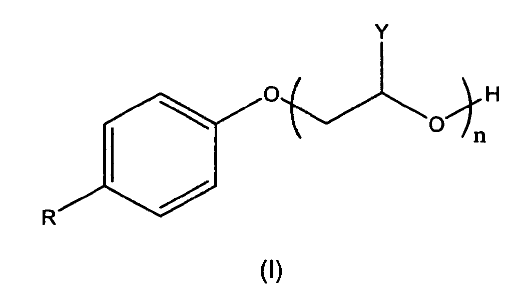 worin R eine Gruppe C₁₅H₃₁₋ₘ (mit m = 0, 2, 4 oder 6), Y Wasserstoff oder eine Methylgruppe und n eine Zahl im Bereich von 0 bis 10 bedeutet, und
   (c) ein oder mehreren, mindestens difunktionellen, Isocyanaten,
   wobei die Verbindungen a), b) und c) in den Äqivalentverhältnissen

   OHₐ₎ : OH_{b)}: NCO_{c}) von 1 : (1+x) : 2(1+y)

   miteinander umgesetzt werden, mit den Maßgaben, dass folgende Bedingungen gelten:
   - x ist eine Zahl im Bereich von 0,05 bis 1,2,
   - y ist eine Zahl im Bereich von (0,2 bis 1,05) x und
   - Äquivalentverhältnis NCO_{c}) > (OHₐ₎ + OH_{b)})
   und
(C) gegebenenfalls ein oder mehrere organische Lösungsmittel und/oder nichtionische Tenside vom Typ der Anlagerungsverbindungen von Ethylen- und/oder Propylenoxid an Alkohole mit 8-18 C-Atomen.

Bezüglich bevorzugter Ausführungsformen im Hinblick auf die Verbindungen (B) gilt das oben Ausgeführte.
Bei den Lösungsmitteln (C) handelt es sich um flüchtige organische Lösungsmittel. Beispiele hiefür sind niedermolekulare Alkohole wie Methanol, Ethanol, n-Propanol, i-Propanol, n-Butanol, i-Butanol, sec-Butanol, Ethandiol, Propandiol, Butandiol, Glycerin, Trimethylolpropan in Betracht.
Als nichtionische Tenside vom Typ der Anlagerungsverbindungen von Ethylen- und/oder Propylenoxid an Alkohole mit 8-18 C-Atomen (C) sind solche mit 2 bis 4 Mol Ethylenoxid pro mol Alkohol bevorzugt. Das Kohlenstoffgerüst der Alkohole kann dabei gesättigt oder ungesättigt, linear oder verzweigt sein. Als Beispiel einer geeigneten Verbindung (C) dieser Klasse sei etwa Dehydol 04 (Handelsprodukt der Fa. Cognis) genannt, ein Anlagerungsprodukt von 4 mol Ethylenoxid pro mol Octanol.

Desweiteren betrifft die Erfindung die Verwendung der erfindungsgemäßen Verdickungsmittel bzw. Verdickerkonzentrate zur Verdickung wäßriger Systeme, bevorzugt wäßriger Dispersionen, ausgewählt aus der Gruppe bestehend aus wäßrigen Kraftfahrzeug- und Industrielacken, Druck- und Textilfarben, Pigmentdruckpasten, wäßrigen pharmazeutischen Formulierungen, kosmetischen Formulierungen oder pharmazeutisch-kosmetischen Formulierungen, Pflanzenschutzformulierungen, Füllstoff- und Pigmentdispersionen, Zubereitungen von Waschmitteln, Klebstoffen, Wachsen und Polituren sowie für die Erdölförderung, insbesondere zur Verdickung von wäßrigen Putz- und Anstrichfarben in Dispersionsform.

### Beispiele

### Eingesetzte Chemikalien und verwendete Abkürzungen

| | |
|---|---|
| PEG 8000: | Pluriol E 8000 (Fa. BASF) |
| IPDI: | Isophorondiisocyanat (IPDI, Fa. Degussa/Hüls) |
| Exxal 9: | Isononanol (oxomethyliertes Propentrimer; Handelsprodukt "Exxal 9" der Firma Exxon Mobil Chemical) |
| Dehydol 04 | Anlagerungsprodukt von 4 mol Ethylenoxid an 1 mol n-Octanol (Fa. Cognis) |
| NeoCryl XK 98 | Acrylemulsion (Fa. DSM NeoResins) |
| Cardanol*8EO | Anlagerungsprodukt von 8 mol Ethylenoxid an 1 mol Cardanol |
| VE-Wasser | vollentsalztes Wasser |

### Polyurethanherstellung

### Beispiel 1 (erfindgsgemäß)

Im 1L-Vierhalskolben wurden 198 g (24 mmol) PEG 8000 (Polyethylenglykol der BASF) vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 40,9 g Cardanol*8 EO (72 mmol) und 16,0 g Isophorondiisocyanat (72 mmol) zugegeben. Die Reaktionstemperatur wurde während der Zugabe und während der folgenden Reaktionszeit bei 110°C gehalten.
Sobald kein Restisocyanat mehr nachweisbar war, wurde die Temperatur bei 110°C gehalten und 154,0 g Dehydol 04 zugesetzt. Diese Mischung wurde bis zur Homogenität gerührt. Anschließend wurden unter Rühren 364,2 g VE-Wasser zugesetzt. Nachdem dass Produkt abgekühlt war, wurden ca. 740 g einer viskosen, trüben, leicht gelblichen Polymerlösung aus dem Reaktionsgefäß isoliert.
Der Trockenrückstand (zu dessen Bestimmung ca. 2 g der wie beschriebenen hergestellten Polymerlösung in einem 10 cm Aluschälchen bei 105°C über 1,5 h im Umlufttrockenschrank getrocknet wurden) betrug 51,1 Gew.-% und die Brookfield-Viskosität 8,9 Pas (Brookfield RVT-Viskosimeter/Spindel 3/10Upm/23°C). Die Lackviskosität im Epprecht Viskosimeter betrug 140 Pas (Spindel C).

### Beispiel 2 (zum Vergleich)

Im 1L-Vierhalskolben wurden 185,7 g (24 mmol) PEG 8000 (Polyethylenglykol der BASF) vorgelegt. Es wurde zweimal evakuiert und mit Stickstoff belüftet. Anschließend wurde Vakuum angelegt und der Ansatz auf 100°C erhitzt. Bei dieser Temperatur wurde bei einem Vakuum von mindestens 10 mbar über einen Zeitraum von zwei Stunden entwässert. Dann wurde mit Stickstoff belüftet und im weiteren Verlauf die Schutzgasatmosphäre durch einen leichten Stickstoffstrom aufrechterhalten. Über die gesamte folgende Reaktionszeit wurde mit einer Rüherdrehzahl von 120 Upm gerührt. Danach wurden nacheinander 10,6 g (72 mmol) Exxal 9 (Isononanol) und 16,0 g Isophorondiisocyanat (72 mmol) zugegeben. Die Reaktionstemperatur wurde während der Zugabe und während der folgenden Reaktionszeit bei 110°C gehalten.
Sobald kein Restisocyanat mehr nachweisbar war, wurde die Temperatur bei 110°C gehalten und 123,3 g Dehydol 04 zugesetzt. Diese Mischung wurde bis zur Homogenität gerührt. Anschließend wurden unter Rühren 296,2 g VE-Wasser zugesetzt. Nachdem dass Produkt abgekühlt war, wurden ca. 622,3 g einer viskosen, trüben, leicht gelblichen Polymerlösung aus dem Reaktionsgefäß isoliert.
Der Trockenrückstand (zu dessen Bestimmung ca. 2 g der wie beschriebenen hergestellten Polymerlösung in einem 10 cm Aluschälchen bei 105°C über 1,5 h im Umlufttrockenschrank getrocknet wurden) betrug 50,4 Gew.-% und die Brookfield-Viskosität 4,85 Pas (Brookfield RVT-Viskosimeter/Spindel 3/10Upm/23°C). Die Lackviskosität im Epprecht Viskosimeter betrug 190 Pas (Spindel C).

### Bestimmung der Dispersionsverdickung

0,2% des jeweiligen polymeren Wirkstoffs gemäß den obigen Beispielen (bezogen und berechnet auf Aktivsubstanz ohne Dehydol 04) wurden mit 0,41 g einer Mischung aus 31,4 Gew.-% Propandiol und 68,6 Gew.-% Wasser homogenisiert. Danach wurden 20 g der wäßrigen Polyacrylatdispersion Neocryl XK 90 (45% Feststoffgehalt; Neo Resins) zugesetzt und die Mischung mit einem Holzspatel ca. zwei Minuten homogen gerührt. Nach einer Standzeit von mindestens 20 Stunden wurde erneut mit einem Holzspatel vorsichtig durchgerührt. Dann wurde mit einem Brookfield Kegel-Platte-Viskosimeter Haake RC20-CPS-P mit Kegel C50-1 die Viskosität gemessen. Die Ergebnisse können Tabelle 1 entnommen werden.

**Tabelle 1: Dispersions-Viskositäten**

| D [1/s] | Beispiel 1 (Erfindung) | Beispiel 2 (Vergleich) |
|---|---|---|
| 0,1 | 321,8 | - |
| 0,5 | 237,0 | - |
| 1,0 | 186,0 | 2,1 |
| 2,0 | 142,6 | 2,6 |
| 5,0 | 78,6 | 2,7 |
| 10,0 | 48,1 | 2,6 |
| 50,0 | 11,6 | 1,9 |
| 100,0 | 5,2 | 1,6 |
| 300,0 | 1,5 | 1,1 |
| 500,0 | 0,7 | 0,9 |
| 4800,0 | 0,1 | - |

Die Angabe "-" in der Spalte "Beispiel 2" der Tabelle 1 bedeutet, dass keine Messung möglich war. Die Angaben der Dispersions-Viskositäten in Tabelle 1 sind in [mPas]. Die Abkürzung "D" in der ersten Spalte der Tabelle 1 bedeutet Scherrate.

Fazit: Aus Tabelle 1 geht klar hervor, dass mit den erfindungsgemäßen Verdickern (Beispiel 1 ) insgesamt eine deutlich verbesserte Verdickungswirksamkeit im low-shear-Bereich erreicht wird, als mit einem Verdicker nach dem Stand der Technik (Beispiel 2).

## Patentansprüche

1. Verdickungsmittel, die auf einer wäßrigen Zubereitung nicht-ionischer, in Wasser dispergierbarer oder in Wasser löslicher Polyurethane basieren, wobei diese Polyurethane herstellbar sind durch Umsetzung von
(a) ein oder mehreren hydrophilen Polyolen, die pro Molekül mindestens zwei OH-Gruppen und mindestens zwei funktionelle Gruppen, die ausgewählt sind aus den Funktionen -O- (Ethergruppen) und -COO-(Estergruppen), wobei das Molgewicht dieser hydrophilen Verbindungen mindestens 300 beträgt, enthalten,
(b) ein oder mehreren Verbindungen der Formel (I) 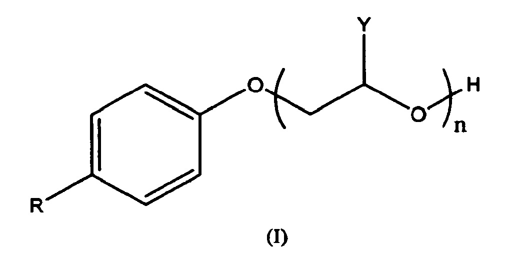 worin R eine Gruppe C₁₅H₃₁₋ₘ (mit m = 0, 2, 4 oder 6), Y Wasserstoff oder eine Methylgruppe und n eine Zahl im Bereich von 0 bis 10 bedeutet, und
(c) ein oder mehreren, mindestens difunktionellen, Isocyanaten,
**dadurch gekennzeichnet, dass** die Verbindungen a), b) und c) in den Äqivalentverhältnissen OHₐ) : OH_{b}) : NCO_{c}) von 1 : (1+x) : 2(1+y) miteinander umgesetzt werden, mit den Maßgaben, dass folgende Bedingungen gelten:
• x ist eine Zahl im Bereich von 0,05 bis 1,2,
• y ist eine Zahl im Bereich von (0,2 bis 1,05) x und
• Äquivalentverhältnis NCO_{c}) > (OHₐ) + OH_{b})).

2. Verdickungsmittel gemäß Anspruch 1, wobei Komponente (a) gewählt wird aus der Gruppe der Polyethylenglykole mit einem Molgewicht im Bereich von 2.000 bis 20.000.

3. Verdickungsmittel gemäß Anspruch 1 oder 2, wobei Komponente (b) gewählt wird aus der Gruppe der Verbindungen (I), worin R eine Gruppe C₁₅H₃₁₋ₘ (mit m = 0, 2, 4 oder 6), Y Wasserstoff oder eine Methylgruppe und n eine Zahl im Bereich von 0 bis 10 bedeutet.

4. Verdickungsmittel gemäß einem der Ansprüche 1 bis 3, wobei Komponente (c) gewählt wird aus der Gruppe Isophorondiisocyanat und Tetramethylxyloldiisocyanat.

5. Verdickerkonzentrate enthaltend
(A) Wasser,
(B) nicht-ionische, in Wasser dispergierbare oder in Wasser lösliche Polyurethane gemäß einem der Ansprüche 1 bis 4 und
(C) gegebenenfalls ein oder mehrere organische Lösungsmittel und/oder nicht-ionische Tenside vom Typ der Anlagerungsverbindungen von Ethylen- und/oder Propylenoxid an Alkohole mit 8-18 C-Atomen.

6. Verwendung der Verdickungsmittel gemäß den Ansprüchen 1 bis 4 zur Verdickung von Dispersionsfarben.

7. Verwendung der Verdickungsmittel gemäß den Ansprüchen 1 bis 4 zur Verdickung von wäßrigen Dispersionen.

8. Verwendung nach Anspruch 7, wobei es sich bei den wässrigen Dispersionen um kosmetische Zubereitungen handelt.

## Claims

1. Thickeners which are based on an aqueous preparation of nonionic water-dispersible or water-soluble polyurethanes, it being possible to produce these polyurethanes by reacting
(a) one or more hydrophilic polyols which contain, per molecule, at least two OH groups and at least two functional groups which are selected from the functions -O- (ether groups) and -COO- (ester groups), where the molecular weight of these hydrophilic compounds is at least 300,
(b) one or more compounds of the formula (I) 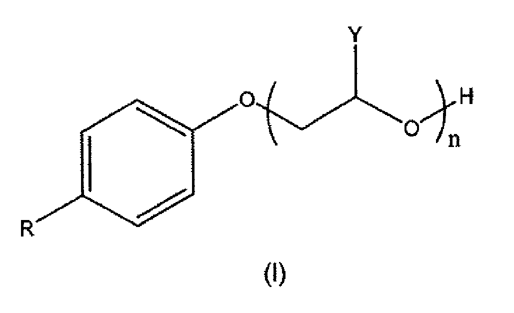 in which R is a C₁₅H₃₁₋ₘ group (where m = 0, 2, 4 or 6), Y is hydrogen or a methyl group and n is a number in the range from 0 to 10, and
(c) one or more at least difunctional isocyanates, **characterized in that** the compounds a), b) and c) are reacted with one another in the equivalent ratios OHₐ):OH_{b}):NCO_{c}) of 1:(1+x):2(1+y), with the provisos that the following conditions apply:
• x is a number in the range from 0.05 to 1.2,
• y is a number in the range from (0.2 to 1.05)x, and
• equivalent ratio NCO_{c}) > (OHₐ) + OH_{b})).

2. Thickeners according to Claim 1, where component (a) is selected from the group of polyethylene glycols with a molecular weight in the range from 2000 to 20 000.

3. Thickeners according to Claim 1 or 2, where component (b) is selected from the group of compounds (I), in which R is a C₁₅H₃₁₋ₘ group (where m = 0, 2, 4 or 6), Y is hydrogen or a methyl group and n is a number in the range from 0 to 10.

4. Thickeners according to any of Claims 1 to 3, where component (c) is selected from the group isophorone diisocyanate and tetramethylxylene diisocyanate.

5. Thickener concentrates comprising
(A) water
(B) nonionic water-dispersible or water-soluble polyurethanes according to any of Claims 1 to 4, and
(C) optionally one or more organic solvents and/or nonionic surfactants of the type of addition compounds of ethylene oxide and/or propylene oxide onto alcohols having 8 to 18 carbon atoms.

6. Use of the thickeners according to Claims 1 to 4 for thickening emulsion paints.

7. Use of the thickeners according to Claims 1 to 4 for thickening aqueous dispersions.

8. Use according to Claim 7, where the aqueous dispersions are cosmetic preparations.

## Revendications

1. Epaississants à base d'une composition aqueuse de polyuréthanes non ioniques, dispersibles ou solubles dans l'eau, ces polyuréthanes pouvant être préparés par transformation
(a) d'un ou de plusieurs polyols hydrophiles, qui contiennent par molécule au moins deux groupes OH et au moins deux groupes fonctionnels, choisis parmi les fonctions -O- (groupes éther) et -COO-(groupes ester), le poids moléculaire de ces composés hydrophiles valant au moins 300,
(b) d'un ou de plusieurs composés de formule (I) 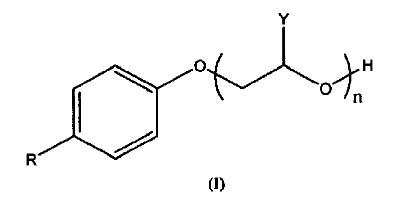 R signifiant un groupe C₁₅H₃₁₋ₘ (m = 0, 2, 4 ou 6), Y signifiant hydrogène ou un groupe méthyle et n valant un nombre dans la plage de 0 à 10, et
(c) d'un ou de plusieurs isocyanates au moins difonctionnels,
**caractérisés en ce que** les composés a), b) et c) sont transformés l'un avec l'autre dans les rapports d'équivalents OHₐ):OH_{b}):NCO_{c}) de 1:(1+x):2(1+y), à condition que les conditions suivantes soient en vigueur :
- x représente un nombre entier de la plage de 0,05 à 1,2,
- y représente un nombre entier de la plage de (0,2 à 1,05)x et
- le rapport d'équivalents NCO_{c}) > (OHₐ) + OH_{b})).

2. Epaississants selon la revendication 1, le composant (a) étant choisi dans le groupe des polyéthylèneglycols présentant un poids moléculaire dans la plage de 2000 à 20 000.

3. Epaississants selon la revendication 1 ou 2, le composant (b) étant choisi dans le groupe des composés (I), R signifiant un groupe C₁₅H₃₁₋ₘ (m = 0, 2, 4 ou 6), Y signifiant hydrogène ou un groupe méthyle et n signifiant un nombre dans la plage de 0 à 10.

4. Epaississants selon l'une quelconque des revendications 1 à 3, le composant (c) étant choisi dans le groupe formé par l'isophoronediisocyanate et le tétraméthylxylènediisocyanate.

5. Concentrats d'épaississants contenant
(A) de l'eau,
(B) des polyuréthanes non ioniques, dispersibles ou solubles dans l'eau selon l'une quelconque des revendications 1 à 4 et
(C) le cas échéant un ou plusieurs solvants organiques et/ou agents tensioactifs non ioniques du type des composés d'addition d'oxyde d'éthylène et/ou d'oxyde de propylène sur des alcools comprenant 8-18 atomes de carbone.

6. Utilisation des épaississants selon les revendications 1 à 4 pour l'épaississement de peintures en dispersion.

7. Utilisation des épaississants selon les revendications 1 à 4 pour l'épaississement de dispersions aqueuses.

8. Utilisation selon la revendication 7, les dispersions aqueuses étant des compositions cosmétiques.
